(19) Europäisches Patentamt
European Patent Office
Office européen des brevets

(11) EP 2 019 121 A1

(12) **EUROPEAN PATENT APPLICATION**
published in accordance with Art. 153(4) EPC

(43) Date of publication:
**28.01.2009 Bulletin 2009/05**

(21) Application number: **07743438.9**

(22) Date of filing: **16.05.2007**

(51) Int Cl.:
***C08G 64/14*** *(2006.01)* ***G11B 7/24*** *(2006.01)*
***G11B 7/253*** *(2006.01)*

(86) International application number:
**PCT/JP2007/060003**

(87) International publication number:
**WO 2007/132874 (22.11.2007 Gazette 2007/47)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **16.05.2006 JP 2006135937**

(71) Applicant: **Mitsubishi Gas Chemical Company, Inc.**
**Chiyoda-ku**
**Tokyo 100-8324 (JP)**

(72) Inventors:
- **KANAGAWA, Tatsuya**
  **Kamisu-shi, Ibaraki 3140102 (JP)**
- **ANDOU, Kazuhiro**
  **Kamisu-shi, Ibaraki 3140102 (JP)**

(74) Representative: **HOFFMANN EITLE**
**Patent- und Rechtsanwälte**
**Arabellastrasse 4**
**81925 München (DE)**

(54) **POLYCARBONATE RESIN AND OPTICAL MATERIAL COMPRISING THE SAME**

(57) A polycarbonate resin which is reduced in the change of hygroscopic-expansion coefficient with changing environmental humidity, is inhibited from warping, and is suitable for use as an optical material is provided with excellent productivity. The polycarbonate resin is obtained by reacting an aromatic dihydric phenol compound (2,2-bis(4-hydroxyphenyl)propane, etc.), a compound forming a carbonic ester (phosgene, etc.), and a chain terminator represented by the following general formula (A) (dodecyl 4-hydroxybenzoate, etc.). (In the formula (A), n is an integer of 10 - 20.)

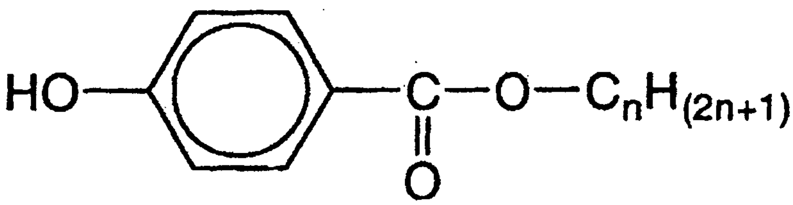

(A)

EP 2 019 121 A1

## Description

### Technical Field

The present invention relates to a polycarbonate resin which is suitable for manufacturing optical disk substrates such as CD, LD, MO disks, DVD, Blu-Ray disks and the like, especially a polycarbonate resin which is low in the rate of change of hygroscopic-expansion coefficient with changing environmental humidity.

### Background Art

Currently, polycarbonate resins (to be referred to as "PC" hereinafter), polymethylmethacrylate (PMMA), cyclic polyolefins and the like are commonly used as an optical disk substrate material, among which PC is the most balanced material in terms of dimensional stability, impact strength and costs. Among PCs, especially, bisphenol A type PC is most widely used as an optical disk material because of its high cost effectiveness.
However, with density increase in an optical disk in recent years, performances required for an optical disk substrate material becomes also severe and the performances of PC becomes insufficient.
A cover layer system typified by a Blu-Ray disk has become a mainstream of a high-density optical disk development. In the cover layer system, minute signals having 0.14 micrometer of minimum pit length and 0. 32 micrometer of track pitch are read and/or written using a pickup lens having high numerical aperture of NA=0.85.
Therefore, strict flatness is required to a disk substrate more than ever.
Since bisphenol A-type PC is characterized in that it is excellent in dimensional stability having lower hygroscopic-expansion coefficient compared with other resins such as PMMA, it is used as a material for an optical disk having conventional packing density wherein minimum pit length is 0.4 micrometer or more and track pitch is 0.74 micrometer or more.
However, when used as a high-density optical disk such as a Blu-Ray disk, PC has such a problem that warping of a disk substrate by hygroscopic-expansion with changing environmental humidity will go beyond a permissible value and it is impossible to read a signal by focal error and/or tracking error.
In order to solve the above problem, a technique for inhibiting from warping of an optical disk with the environmental change by forming a metal moisture-proof film on the reverse side of the recording side of an optical disk substrate and further applying a print label film thereon to moderate asymmetry caused by the film quality and film structure with the recording side has been developed (see Patent Document 1). However, there was a problem on this technique that the manufacturing process of an optical disk was complicated and cost was increased.
Meanwhile, a process for producing a polycarbonate resin molded products using p-hydroxy benzoic acids having an alkyl group of carbon numbers of 1-7 at the end of molecule thereof as a chain terminator in order to increase adhesiveness with a metal is developed (see Patent Document 2). However, in this specification, there is no description about hygroscopic-expansion of said polycarbonate resin with changing environmental humidity.
The present inventors have produced a polycarbonate resin using p-hydroxy benzoic acids as a chain terminator by way of trial and have found that only a polycarbonate resin produced by using p-hydroxy benzoic acid having an alkyl group of carbon numbers of 10-20 as a chain terminator can specifically exhibit reduced in the rate of change of hygroscopic-expansion coefficient with changing environmental humidity.
Patent Document 1: International Publication No. WO2004/021343
Patent Document 2: Jpn. Pat. Publication No. S63-182350

### Disclosure of the Invention

### Problems to be Solved by the Invention

The problem to be solved by the present invention is to provide a material which is reduced in the rate of change of hygroscopic-expansion coefficient with changing environmental humidity, namely, is inhibited from warping with changing environmental humidity, with the same excellent productivity as bisphenol A-type PC.

### Means for Solving the Problems

As a result of the intensive studies to solve the conventional problems, the present inventors have found that a polycarbonate resin having a specific terminal structure is reduced in the rate of change of hygroscopic-expansion coefficient with changing environmental humidity and can be produced with the same excellent productivity as conventional bisphenol A-type PC, and have accomplished the present invention.
That is, the present invention relates to a polycarbonate resin, a process for producing the same and an optical material comprising the same shown below:

(1) A polycarbonate resin which mainly consists of a constituent unit represented by the following general formula (I) and has a terminal structure represented by the following general formula (II).

[Chemical Formula 1]

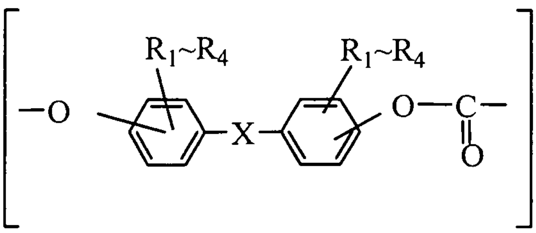

(I)

(In the formula (I), $R_1$ to $R_4$, each independently, represent a group selected from the group consisting of a hydrogen atom, an alkyl group having 1-9 carbon atoms, an aryl group having 6-12 carbon atoms, an alkenyl group having 2-5 carbon atoms, an alkoxy group having 1-5 carbon atoms, and an aralkyl group having 7-17 carbon atoms. When $R_1$ to $R_4$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms. X represents a divalent group selected from the group consisting of the structures represented by the following formula (III):

[Chemical Formula 2]

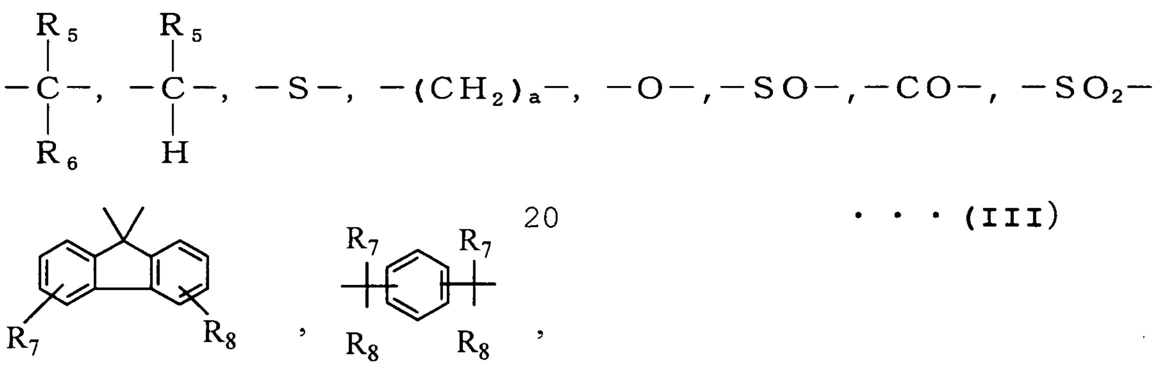

· · · (III)

(In the formula (III), each of $R_5$ and $R_6$ represents independently a group selected from the group consisting of a hydrogen atom, an alkyl group having 1-9 carbon atoms, an alkoxy group having 1-5 carbon atoms, and an aryl group having 6-12 carbon atoms, or a group forming a carbon ring or a heterocycle wherein $R_5$ and $R_6$ are bonded with each other. When $R_5$ and $R_6$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms. "a" represents an integer of 0-20.
Each of $R_7$ and $R_8$ independently represents a group selected from the group consisting of a hydrogen atom, an alkyl group having 1-9 carbon atoms, an alkoxy group having 1-9 carbon atoms, and an aryl group having 6-12 carbon atoms, or a group forming a carbon ring or a heterocycle wherein $R_7$ and $R_8$ are bonded with each other. When $R_7$ and $R_8$ are

a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms.)

[Chemical Formula 3]

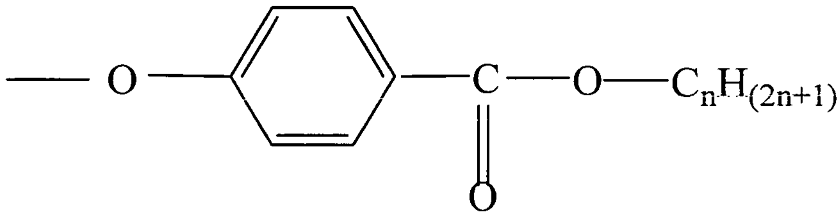

(II)

(In the formula (II), n represents an integer of 10-20.)

(2) The polycarbonate resin according to claim 1, wherein "n" in said general formula (II) represents an integer of 12-18.

(3) The polycarbonate resin according to claim 1 or 2, wherein the intrinsic viscosity thereof is 0.2-0.6 dl/g.

4) A process for producing a polycarbonate resin according to claim 1 comprising a step of reacting an aromatic dihydric phenol compound, a carbonate-forming compound and a chain terminator represented by the following general formula (A).

[Chemical Formula 4]

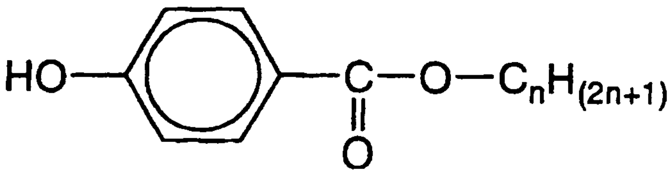

( A )

(In the formula (A), "n" represents an integer of 10-20.)

(5) The process for producing a polycarbonate resin according to claim 4, wherein said aromatic dihydric phenol compound is a compound represented by the following general formula (B).

[Chemical Formula 5]

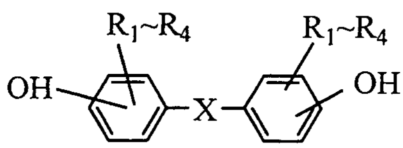

(B)

(In the formula (B), each of $R_1$ to $R_4$ independently represents a group selected from the group consisting of a hydrogen atom, an alkyl group having 1-9 carbon atoms, an aryl group having 6-12 carbon atoms, an alkenyl group having 2-5 carbon atoms, an alkoxy group having 1-5 carbon atoms, and an aralkyl group having 7-17 carbon atoms. When $R_1$ to $R_4$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms. X represents a divalent group selected from the group consisting of the structures represented by the following formula (III):
[Chemical Formula 6]

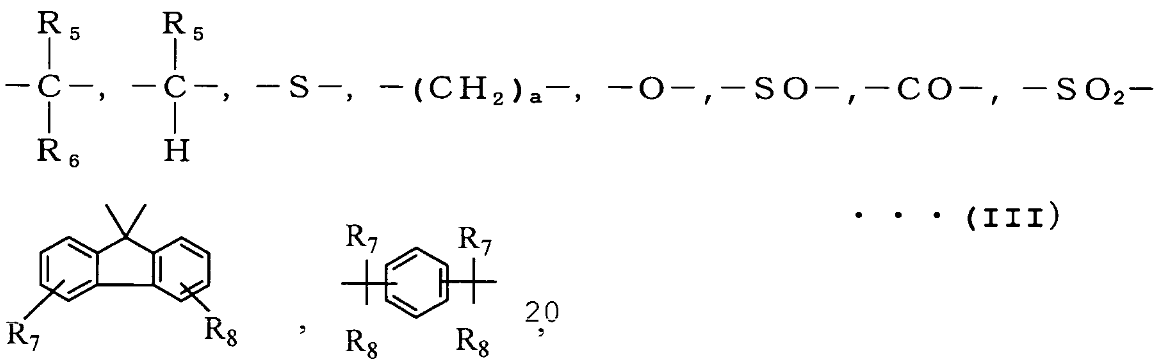

· · · (III)

(In the formula (III), each of $R_5$ and $R_6$ represents independently a group selected from the group consisting of a hydrogen atom, an alkyl group having 1-9 carbon atoms, an alkoxy group having 1-5 carbon atoms, and an aryl group having 6-12 carbon atoms, or a group forming a carbon ring or a heterocycle wherein $R_5$ and $R_6$ are bonded with each other. When $R_5$ and $R_6$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms. "a" represents an integer of 0-20.
Each of $R_7$ and $R_8$ independently represents a group selected from the group consisting of a hydrogen atom, an alkyl group having 1-9 carbon atoms, an alkoxy group having 1-9 carbon atoms, and an aryl group having 6-12 carbon atoms, or a group forming a carbon ring or a heterocycle wherein $R_7$ and $R_8$ are bonded with each other. When $R_7$ and $R_8$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms.
(6) The process for producing a polycarbonate resin according to claim 4 or 5, wherein said aromatic dihydric phenol compound is 2,2-bis(4-hydroxyphenyl)propane.
(7) An optical material comprising the polycarbonate resin according to any one of claims 1 to 3.
(8) An optical disk substrate molded from the optical material according to claim 7.
(9) The optical disk substrate according to claim 8, wherein minimum pit length is 0.01 to 0.3 μm and track pitch is 0.01 to 0.6 μm.

**Effects of the Invention**

The polycarbonate resin according to the present invention is especially characterized in that the rate of change of hygroscopic-expansion coefficient with changing environmental humidity is low. Therefore, it is suitable for producing optical disk substrates such as CD, LD, MO disks, DVD, and Blu-Ray disks.
In addition, according to the process for producing the polycarbonate resin of the present invention, it is possible to produce a polycarbonate resin having novel properties by using as the main raw material a bisphenol A-type polycarbonate resin distributed globally now, only with changing of the chain terminator. Therefore, it can be produced using the conventional production line, without needing reequipping etc. Thus, a polycarbonate material for an optical disk substrate having remarkably excellent properties can be provided with the same excellent productivity as the conventional bisphenol A-type polycarbonate resin. **Best Mode for Carrying Out the Invention**

**1. Polycarbonate resin**

(1) Constituent unit

The polycarbonate resin according to the present invention mainly consists of a constituent unit represented by the following general formula (I).

[Chemical Formula 7]

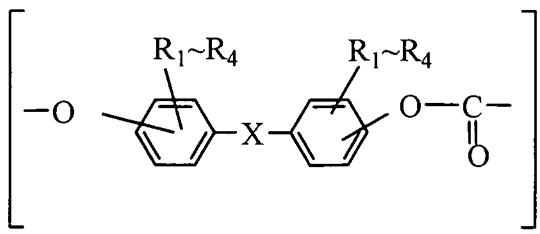

(I)

In the formula (I), $R_1$ to $R_4$, each independently, represent a group selected from the group consisting of a hydrogen atom, an alkyl group having 1-9 carbon atoms, an aryl group having 6-12 carbon atoms, an alkenyl group having 2-5 carbon atoms, an alkoxy group having 1-5 carbon atoms, and an aralkyl group having 7-17 carbon atoms. When $R_1$ to $R_4$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms.

In the formula (I), X represents a divalent group selected from the group consisting of the structures represented by the following formula (III):

[Chemical Formula 8]

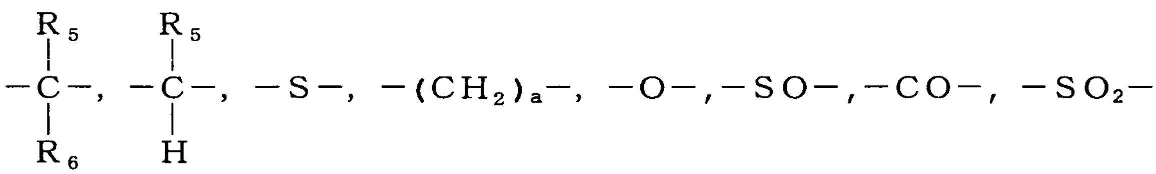

· · · (III)

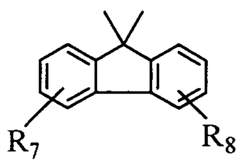

,

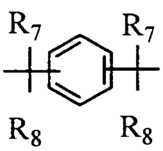

,

In the formula (III), each of $R_5$ and $R_6$ represents independently a group selected from the group consisting of a hydrogen atom, an alkyl group having 1-9 carbon atoms, an alkoxy group having 1-5 carbon atoms, and an aryl group having 6-12 carbon atoms, or a group forming a carbon ring or a heterocycle wherein $R_5$ and $R_6$ are bonded with each other.

When $R_5$ and $R_6$ are a group containing a carbon atom, the carbon atom can be bonded with a substituent

selected from the group consisting of an alkyl group having 1-5 carbon atoms, an alkenyl group having 2-5 carbon atoms and an alkoxy group having 1-5 carbon atoms. "a" represents an integer of 0-20.

Each of $R_7$ and $R_8$ independently represents a group selected from the group consisting of a hydrogen atom, an alkyl group having 1-9 carbon atoms, an alkoxy group having 1-9 carbon atoms, and an aryl group having 6-12 carbon atoms, or a group forming a carbon ring or a heterocycle wherein $R_7$ and $R_8$ are bonded with each other. When $R_7$ and $R_8$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms.

Examples of the preferable constituent units represented by the above formula (I) include carbonate units including residues of aromatic dihydric phenol compounds such as bis(4-hydroxyphenyl)methane, bis(4-hydroxyphenyl) ether, bis(4-hydroxyphenyl)sulfone, bis(4-hydroxyphenyl)sulfoxide, bis(4-hydroxyphenyl)sulfide, bis(4-hydroxyphenyl) ketone, 1,1-bis(4-hydroxyphenyl)ethane, 1,1-bis(4-hydroxyphenyl)-2-ethylhexane, 2,2-bis(4-hydroxyphenyl)propane, 2,2-bis(4-hydroxyphenyl)butane, 1,1-bis(4-hydroxyphenyl)cyclohexane, 1,1-bis(4-hydroxyphenyl)-3,3,5-trimethylcyclohexane, 2,2-bis(4-hydroxy-3,5-dichlorophenyl)propane, 2,2-bis(4-hydroxy-3,5-dibromophenyl)propane, 2,2-bis(4-hydroxy-3,5-dimethylphenyl)propane, 2,2-bis(4-hydroxy-3,5-diethylphenyl)propane, 2,2-bis(4-hydroxy-3,5-dipropylphenyl)propane, and 9,9-bis(3-methyl-4-hydroxyphenyl)fluorene.

The polycarbonate resin of the present invention can be a homopolymer consisting of only one of the constituent units represented by the above formula (I), or can be a copolymer consisting of not less than two of said constituent units. The most preferable one is a bisphenol A-type polycarbonate consisting of carbonate units containing a residue of 2,2-bis(4-hydroxyphenyl)propane.

(2) Terminal Structure

The polycarbonate resin of the present invention is **characterized in that** it is consisting of the above constituent unit(s) and the terminal structure thereof is represented by the following general formula (II).

[Chemical Formula 9]

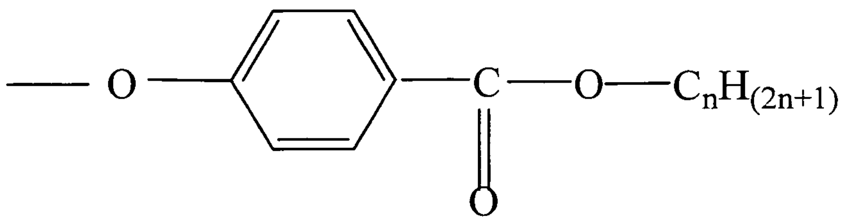

(II)

In the formula (II), "n" represents an integer of 10-20, preferably 12-18. That is, the polycarbonate resin of the present invention has a terminal structure containing a suchlike long-chain alkyl group. When "n" is less than 10 or more than 20, the rate of change of hygroscopic-expansion of said polycarbonate resin would increase, which is not suitable for use as an optical material.

All terminal groups of the polycarbonate resin of the present invention have substantially the structure represented by the above formula (II). Though phenolic OH which does not react with a chain terminator may remain as the terminal group depending on the synthesizing conditions, the structures of substantially all terminal groups of the polycarbonate resin of the present invention are represented by the above formula (II).

In addition, using said chain terminator together with other chain terminators having different structures or blending said polycarbonate resin with other polycarbonate resins according to the required properties for the material is permitted within the range of not departing from the scope of the present invention.

Though the molecular weight of the polycarbonate resin of the present invention is not particularly limited, it is preferable that the intrinsic viscosity thereof is 0.2 to 0.6 dl/g.

2. Process for producing the polycarbonate resin

The polycarbonate resin of the present invention can be produced by reacting an aromatic dihydric phenol

compound, a carbonate-forming compound and a chain terminator represented by the following general formula (A).

[Chemical Formula 10]

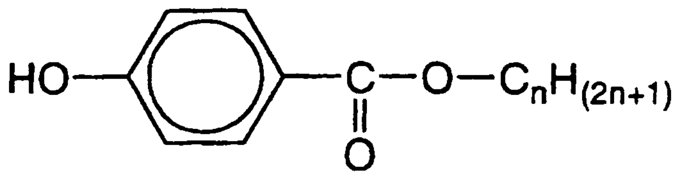

(A)

(In the formula (A), "n" represents an integer of 10-20.)

In the above general formula (A), "n" represents an integer of 10-20, preferably 12-18. When "n" is less than 12 or more than 18, the rate of change of hygroscopic-expansion of said polycarbonate resin would increase, which is unfavorable.

For the process for producing a polycarbonate resin according to the present invention using the above starting materials, any of the known methods for producing polycarbonate from bisphenol A, for example, a direct reaction process of aromatic dihydric phenol, phosgene and a chain terminator (a phosgene method), an ester exchange reaction of aromatic dihydric phenol, bisarylcarbonate and a chain terminator (a transesterification method) and the like can be employed.

Of the phosgene method and the transesterification method, the phosgene method is preferable considering controllability of molecular weight.

Among the above starting materials, examples of carbonate forming compounds include phosgene used for the phosgene method and bisarylcarbonates used for the transesterification method.

Examples of bisarylcarbonates include diphenylcarbonate, di-p-tolylcarbonate, phenyl-p-tolylcarbonate, di-p-chlorophenylcarbonate, and dinaphthylcarbonate.

Examples of aromatic dihydric phenols include a compound represented by the following general formula (B).

[Chemical Formula 11]

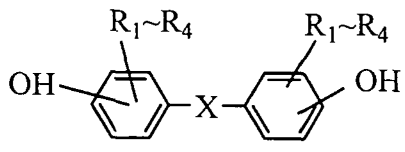

(B)

In the above general formula (B), X is selected from the group consisting of divalent organic groups represented by the following formula (III):

[Chemical Formula 12]

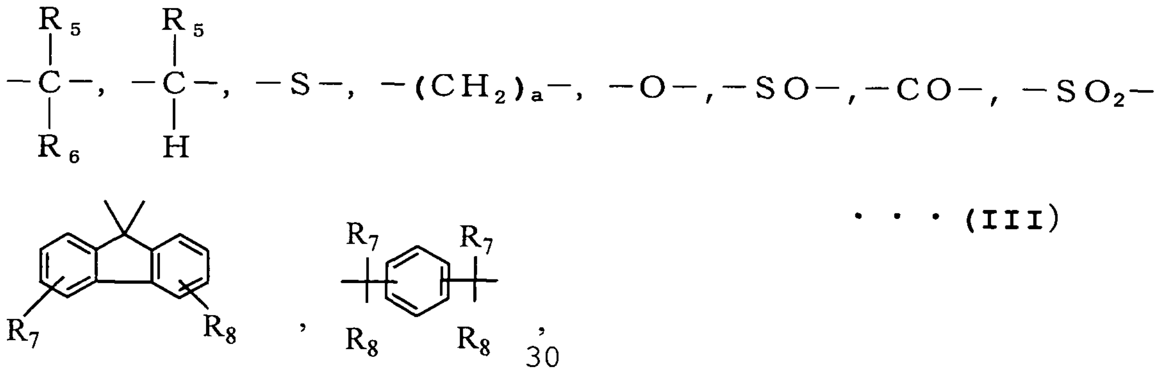

· · · (III)

In the formula (III), each of $R_5$ and $R_6$ represents independently a group selected from the group consisting of a hydrogen atom, an alkyl group having 1-9 carbon atoms, an alkoxy group having 1-5 carbon atoms, and an aryl group having 6-12 carbon atoms, or a group forming a carbon ring or a heterocycle wherein $R_5$ and $R_6$ are bonded with each other.

When $R_5$ and $R_6$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms. "a" represents an integer of 0-20.

Each of $R_7$ and $R_8$ independently represents a group selected from the group consisting of a hydrogen atom, an alkyl group having 1-9 carbon atoms, an alkoxy group having 1-9 carbon atoms, and an aryl group having 6-12 carbon atoms, or a group forming a carbon ring or a heterocycle wherein $R_7$ and $R_8$ are bonded with each other. When $R_7$ and $R_8$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms.

Examples of the aromatic dihydric phenol compounds represented by the above formula (B) include bis(4-hydroxyphenyl)methane, bis(4-hydroxyphenyl)ether, bis(4-hydroxyphenyl)sulfone, bis(4-hydroxyphenyl)sulfoxide, bis (4-hydroxyphenyl)sulfide, bis(4-hydroxyphenyl)ketone, 1,1-bis(4-hydroxyphenyl)ethane, 1,1-bis(4-hydroxyphenyl)-2-ethylhexane, 2,2-bis(4-hydroxyphenyl)propane, 2,2-bis(4-hydroxyphenyl)butane, 1,1-bis(4-hydroxyphenyl)cyclohexane, 1,1-bis(4-hydroxyphenyl)-3,3,5-trimethylcyclohexane, 2,2-bis(4-hydroxy-3,5-dichlorophenyl)propane, 2,2-bis(4-hydroxy-3,5-dibromophenyl)propane, 2,2-bis(4-hydroxy-3,5-dimethylphenyl)propane, 2,2-bis(4-hydroxy-3,5-diethylphenyl)propane, 2,2-bis(4-hydroxy-3,5-dipropylphenyl)propane, and 9,9-bis(3-methyl-4-hydroxyphenyl)fluorene.
These compounds can be used each independently or two or more of them can be used in combination with each other. Among them, 2,2-bis(4-hydroxyphenyl)propane is most preferable.

Examples of the compounds represented by the above general formula (A) for use as a chain terminator of the present invention include dodecyl-4-hydroxybenzoate, tridecyl-4-hydroxybenzoate, tetradecyl-4-hydroxybenzoate, pentadecyl-4-hydroxybenzoate, heptadecyl-4-hydroxybenzoate and stearyl-4-hydroxybenzoate.
These compounds can be used each independently or two or more of them can be used in combination with each other. Among them, dodecyl-4-hydroxybenzoate is most preferable.

According to the phosgene method, in general, aromatic dihydric phenol of the present invention is brought into reaction with phosgene under the presence of an acid coupling agent and a solvent. Examples of acid coupling agents include pyridine and hydroxides of alkali metals such as sodium hydroxide, potassium hydroxide and the like. Examples of solvents include methylene chloride, chloroform, chlorobenzene and xylene.
In addition, for the purpose of accelerating the condensation polymerization reaction, catalysts such as a tertiary amine catalyst such as triethylamine or a quaternary ammonium salt and the like are used.

If desired, an antioxidant such as sodium sulfite or hydrosulfite and/or a branching agent such as fluoroglycin, isatin bisphenol, 1,1,1-tris(4-hydroxyphenyl)ethane and α,α',α''-tris(4-hydroxyphenyl)-1,3,5-triisopropylbenzene can be added by a small amount.

Generally, it is proper to conduct the reaction in a temperature range between 0 and 25°C, preferably between 5 and 15°C. While the reaction time may vary depending on the reaction temperature, it is normally between 0.5 minutes and 10 hours, preferably between 1 minute and 1 hour. It is desirable to keep the pH of the reaction system not below 10 during the reaction.

It is preferable to add the compound represented by the formula (A) for use as a chain terminator of the present

invention into the reaction system after reacting aromatic dihydric phenol with phosgene under the condition that it is completely dissolved in the solvent.

When the chain terminator of the present invention is added into the reaction system before reacting aromatic dihydric phenol with phosgene or is added directly into the reaction system without dissolving in the solvent, the pyrolysis temperature of the polycarbonate thus produced would be declined, which may bring about the significant increase of decomposition gas amount at the time of molding an optical disk substrate at high temperature.

The amount of addition of this chain terminator is 0.5-10 mol% based upon the amount of aromatic dihydric phenol. When the amount of the chain terminator is too small, the molecular weight of the polycarbonate resin may become too high and moldability may be deteriorated. When the mount of the chain terminator is too large, the molecular weight of the polycarbonate resin may become too low and physical properties may be deteriorated.

Moreover, tertiary amine such as triethylamine or a quaternary ammonium salt such as triethylbenzylammoniumchloride can be used in order to conduct the polymerization reaction efficiently. The amount of addition of these amines is 0.01-1.0 mol% based upon the amount of aromatic dihydric phenol.

According to the transesterification method, aromatic dihydric phenol and bisarylcarbonate are mixed and reacted with each other at high temperature under reduced pressure. At this time, the compound represented by the general formula (A) is added as a chain terminator.

The reaction is generally conducted in a temperature range between 150 and 350°C, preferably between 200 and 300°C. The ultimate pressure is preferably reduced to 1mmHg or less to remove the phenols, which are derived from said bisarylcarbonate and are produced as a result of the transesterification, from the reaction system by distillation.

While the reaction time varies depending on the reaction temperature and the reduced pressure level, it is generally 1 to 6 hours. The reaction is preferably conducted in an atmosphere of inert gas such as nitrogen or argon. If desired, the reaction may be conducted by adding an antioxidant and/or a branching agent.

The polycarbonate resin synthesized from any of these methods can be molded by way of known molding methods such as extrusion molding, injection molding, blow molding, compression molding and wet molding.

The molecular weight of the polycarbonate resin obtained by the process of the present invention is not particularly limited. However, since it is desirable that injection molding can be done easily when using as an optical material, it is preferable that the intrinsic viscosity thereof is 0.2-0.6 dl/g.

3. Optical Material

The polycarbonate resin of the present invention is suitable for use as an optical material for producing an optical disk substrate such as CD, LD, MO disks, DVD and Blu-Ray disks. When using as an optical material, the intrinsic viscosity thereof is preferably in the range of 0.2-0.6 dl/g.

In addition, even if fluidity of the optical material of the present invention is too high or too low, there may be a problem in moldability. When using as a material for injection molding, it is desirable to have fluidity in the range of, for example, $30\text{-}50\times10^{-2}$cc/sec measured by Koka-type flow tester under the conditions of 280°C, 160gf/$cm^2$ and a nozzle diameter: 1mm$\times$10mm. When it is less than $30\times10^{-2}$CC/sec, transfer failure of the pit may occur caused by low fluidity. When it is more than $50\times10^{-2}$CC/sec, warping of the substrate may occur immediately after molding.

The optical material of the present invention is preferable to be highly purified as well as common polycarbonates for use as an optical material. To be more precise, it is purified so as to satisfy the standards in any way possible such as the amount of dusts having diameter of not less than 50μm which is not substantially detected, the amount of dusts having diameter in the range of 0.5-50μm which is not more than $3\times10^4$, the amount of residual inorganic and organic chlorinated compounds which is not more than 2ppm, the amount of residual alkali metal which is not more than 2ppm, the amount of residual hydroxyl groups which is not more than 200ppm, the amount of residual nitrogen which is not more than 5ppm, the amount of residual monomers which is not more than 20ppm. Moreover, after-treatment such as extraction may be conducted for the purpose of removing low-molecular weight substances or removing solvents.

In order to keep stability and/or releasability required at the time of extrusion molding or injection molding, the optical material of the present invention may, if desired, be blended with an antioxidant such as hindered phenols and phosphites; a lubricant and/or a mold releasing agent such as silicones, fatty acid esters, fatty acids, fatty acid glycerides and natural fats and oils like beeswax; a light stabilizer such as benzotriazoles, benzophenones, dibenzoylmethanes and salicylates; an antistatic agent such as polyalkyleneglycol and fatty acid glycerides accordingly. Furthermore, for the purpose of reducing costs, common bisphenol A-type polycarbonate can be blended optionally within the range not impairing the intended performance thereof. In addition, the preferable molding temperature for extrusion molding and injection molding of the optical material of the present invention is 230-320°C and 240-380°C respectively in terms of fluidity.

4. Optical Disk Substrate

Examples of the optical disk substrates to be produced by the optical material of the present invention include CD, LD, MO disks, DVD, Blu-Ray disks and HD-DVD.

The optical disk substrate of the present invention has its minimum pit length of 0.01-0.3 μm and track pitch of 0.01-0.6 μm.

According to the present invention, by way of using the polycarbonate resin of the present invention obtained by using the above-mentioned specific chain terminator, an optical disk substrate which is significantly small in warping caused by hygroscopic-expansion with changing environmental humidity and is suitable for use as a high-density optical disk can be obtained.

**Examples**

The present invention will be described in more detail below referring to Examples. Note that the scope of the present invention is not limited by the following examples.

<Example 1>

20g of hydrosulfite and 7.00Kg of 2,2-bis(4-hydroxyphenyl)propane (hereinafter, "BPA") were added and dissolved into 52L of 7.9%(w/w) aqueous solution of sodium hydroxide. Then, 32L of methylene chloride was added to the aqueous solution and 3. 67Kg of phosgene was blown into the solution at a rate of 0.12Kg/min, while stirring the solution and keeping the temperature of the solution to 15°C.

A solution obtained by dissolving 620g of dodecyl-4-hydroxybenzoate, manufactured by API Corporation, trade name;"POB-C12" (hereinafter, "POB-C12"), as a chain terminator into 3L of warmed methylene chloride at 35°C was added into the above-mentioned solution after blowing phosgene. Then, the mixed solution was stirred intensely for 10 minutes. Further, 12 ml of triethylamine was added thereto and the mixed solution was stirred for about an hour for polymerization.

After adding 10L of methylene chloride and stirring for 5 minutes, the polymerization solution was separated into an aqueous phase and an organic phase. The organic phase was neutralized by phosphoric acid and was washed repeatedly with water until the electric conductivity of the washing liquid falls not higher than 10 μS to obtain 50L of a purified polymer solution. 15L of n-heptane was added slowly into the obtained purified polymer solution with stirring and then the solution was stirred for about 30 minutes to obtain a mixed solution.

The obtained mixed solution was dropped at a rate of 0. 5L/min into 70L of warm water at 45°C with strongly stirring and the polymer was solidified as removing the solvent.

The obtained solid was filtered and dried at 100°C for 24 hours to obtain 6.5Kg of white powder of the polymer.

The intrinsic viscosity [η] of solution of the polymer at the concentration of 0.5 g/dl at 25°C in methylene chloride as a solvent was 0.36 dl/g. The above polymer thus obtained was analyzed by means of infrared absorption spectrometry. As a result, the absorption due to a carbonyl group was observed at a position near 1,770 $cm^{-1}$ and the absorption due to an ether bond was observed at a position near 1, 240 $cm^{-1}$. Thus, it was confirmed that the polymer was a polycarbonate resin having a carbonate bond. The absorption due to a hydroxyl group at a position of 3650-3200$cm^{-1}$ was hardly observed.

The monomers containing in the polycarbonate was determined by GPC analysis and as a result, the content of each monomer was not more than 20ppm.

Considering the above results together, it was proved that the polycarbonate was a polymer obtained by using the chain terminator represented by the general formula (A) as a chain terminator. Glass transition temperature and 1% weight-loss temperature was measured for the obtained powder of the polycarbonate. The detailed measuring conditions and the results of the measurement were shown in Table 1.

15g of the obtained powder of polycarbonate was dissolved in 100ml of methylene chloride and the solution was coated on a glass plate to prepare a solution casting film with a thickness of 45 μm. Then, a test piece of width 5mm × length 50mm was cut out from the solution cast film thus obtained.

Hygroscopic-expansion coefficient at high humidity (80% RH) and at low humidity (45% RH) at the temperature of 25°C for the prepared test piece was measured by a thermo-mechanical tester TM-9300 equipped with a humidity controller, manufactured by ULVAC-RIKO, Inc., and the rate of change of hygroscopic-expansion coefficient between that at high humidity and that at low humidity was evaluated. The detailed measuring conditions and the results of the measurement were shown in Table 1.

300ppm of stearyl monoglyceride was added to the obtained powder of polycarbonate. Then the mixture was extruded at 300°C by 20mmφ vented extruder with a 10μm polymer filter for melt pelletizing.

An optical disk substrate having an external diameter of 120mm and a thickness of 1.1mm was molded from the pellets

thus obtained by way of injection molding using a molding machine, manufactured by Sumitomo Heavy Industries Ltd., trade name;"SD-40", under the conditions of a resin temperature of 335°C, a mold temperature of 100°C and a molding cycle of 10 sec/piece.
Retardation and transfer rate of the optical disk substrate thus obtained were measured. As a result, it was found to have sufficient performances as an optical disk substrate. The detailed measuring conditions and the results of the measurement were shown in Table 1.

<Example 2>

Experiment was conducted in the same manner as in Example 1 except that 790g of stearyl-4-hydroxybenzoate, manufactured by API Corporation, trade name;"POB-C18" (hereinafter, "POB-C18") was used in place of 579g of the chain terminator "POB-C12".
The intrinsic viscosity of the obtained polycarbonate resin was 0.35 dl/g. According to the analysis by means of infrared absorption spectrometry, it was confirmed that the polymer thus obtained had a polycarbonate polymer structure same as that of Example 1 except for its terminal structure. The evaluation results are shown in Table 1 in the same manner as Example 1.
According to Table 1, it was shown that the polycarbonate resins of Example 1 and Example 2 had the rate of change of hygroscopic-expansion coefficient of not higher than 3.5 ppm/%RH at a temperature of 25°C and relative humidity of 80%RH-45%RH, which indicates that they were reduced in the rate of change of hygroscopic-expansion coefficient with changing environmental humidity.

<Comparative Example 1>

Experiment was conducted in the same manner as in Example 1 except that 304g of p-tert-butylphenol (hereinafter, "PTBP") was used in place of 579g of the chain terminator "POB-C12".
The intrinsic viscosity of the obtained polycarbonate resin was 0.36 dl/g. According to the analysis by means of infrared absorption spectrometry, it was confirmed that the polymer thus obtained had a polycarbonate polymer structure same as that of Example 1 except for its terminal structure. The evaluation results are shown in Table 1 in the same manner as Example 1.

<Comparative Example 2>

Experiment was conducted in the same manner as in Example 1 except that 507g of octyl-4-hydroxybenzoate, manufactured by API Corporation, trade name;"POB-C8" (hereinafter, "POB-C8") was used in place of 579g of the chain terminator "POB-C12".
The intrinsic viscosity of the obtained polycarbonate resin was 0.34 dl/g. According to the analysis by means of infrared absorption spectrometry, it was confirmed that the polymer thus obtained had a polycarbonate polymer structure same as that of Example 1 except for its terminal structure. The evaluation results are shown in Table 1 in the same manner as Example 1.

<Comparative Example 3>

Experiment was conducted in the same manner as in Example 1 except that 904g of docosyl-4-hydroxybenzoate (hereinafter, "POB-C22") was used in place of 579g of the chain terminator "POB-C12".
The intrinsic viscosity of the obtained polycarbonate resin was 0.35 dl/g. According to the analysis by means of infrared absorption spectrometry, it was confirmed that the polymer thus obtained had a polycarbonate polymer structure same as that of Example 1 except for its terminal structure. The evaluation results are shown in Table 1 in the same manner as Example 1.
Table 1

| | Chain Terminator | Intrinsic Viscosity (dl/g) | Glass Transition Temperature (°C) | 1% Weight-loss Temperature (°C) | Rate of Change of Hygroscopic-Expansion Coefficient (ppm/%RH) | Retardation (nm) | Transfer Rate (%) |
|---|---|---|---|---|---|---|---|
| Example 1 | POB-C12 | 0.36 | 120 | 407 | 2.8 | 40 | 97.5 |
| Example 2 | POB-C18 | 0.35 | 108 | 408 | 3.0 | 38 | 97.6 |
| Com. Example 1 | PTBP | 0.36 | 143 | 490 | 4.0 | 100 | 97.0 |
| Com. Example 2 | POB-C 8 | 0.34 | 124 | 406 | 4.1 | 90 | 97.0 |
| Com. Example 3 | POB-C22 | 0.35 | 98 | 402 | 3.9 | 38 | 97.7 |

<Annotation of Table 1>

(1) Intrinsic Viscosity:

The intrinsic viscosity was determined for a polymer solution of 0.5g/100cc in methylene chloride under the conditions at 20°C with Huggins constant of 0.45.

(2) Glass Transition Temperature:

The glass transition temperature was determined by a tangent method from an inflection point of DSC curve obtained by using a Shimadzu heat flux type differential scanning calorimeter, manufactured by Shimadzu Corporation, trade name;"DSC-50" under the conditions of a sample amount of 8mg, nitrogen stream of 50mg/min, a temperature increase rate of 20°C/min and reference: 8mg of silica.

(3) 1% Weight-loss Temperature:

The 1% weight-loss temperature was determined by using a Shimadzu thermogravimetric device, manufactured by Shimadzu Corporation, trade name; "TGA-50" under the conditions of a sample amount of 8mg, nitrogen stream of 50mg/min, a temperature increase rate of 20°C/min. The temperature wherein the weight of a sample is reduced by 1% based upon the sample amount at the time of starting of raising temperature.

(4) Rate of Charge of Hygroscopic-expansion Coefficient:

A sample film having the thickness of 45μm × width of 5mm × length of 50mm was fixed to a pulling holder of a thermo-mechanical tester TM-9300 equipped with a humidity controller, manufactured by ULVAC-RIKO, Inc., at the position of 15mm length and a lord of 5gf was applied thereon.

The expansion amount of the film was measured continuously, at 25°C, firstly under dry nitrogen atmosphere (8%RH of relative humidity) for 12 hours, subsequently at high humidity of 80%RH for 3 hours, and then at low humidity at 45%RH for 3 hours. From a chart of the measurement results thus obtained, the rate of change of hygroscopic-expansion coefficient was determined by the following mathematical formula (I).

In the mathematical formula (I), "P" represents a linear expansion coefficient after 3 hours at high humidity in the case that the linear expansion coefficient at the fixed position of the film after 12 hours under dry nitrogen atmosphere (8%RH of relative humidity) is 0%. "Q" represents a linear expansion coefficient after 3 hours at low humidity in the case

that the linear expansion coefficient at the fixed position of the film after 12 hours under dry nitrogen atmosphere (8%RH of relative humidity) is 0%. "p" represents an actual measurement value of humidity after 3 hours at high humidity. "q" represents an actual measurement value of humidity after 3 hours at low humidity.

$$\text{Rate of change of hygroscopic-expansion coefficient} = (P-Q)/(p-q) \cdots (I)$$

(5) Retardation:

Retardation was measured for any one point at 57 mm distance from the center of the molded optical disk substrate using a highly accurate birefrigence measuring device, manufactured by Mizojiri Optical Co., Ltd., trade name; "ELP-200ADT" under the light source wave length of 632.8nm.

(6) Transfer Rate

The transfer rate was determined by measuring a depth of groove for any one point at 57 mm distance from the center of the molded optical disk substrate using an interatomic force microscope "NV2100", manufactured by Olympus Corporation.

## Industrial Applicability

Since the polycarbonate resin of the present invention has a specific feature that the rate of change of hygroscopic-expansion coefficient with changing environmental humidity is small, it is suitable for manufacturing optical disk substrates such as CD, LD, MO disks, DVD, Blu-Ray disks or the like. In addition, according to the process for producing the polycarbonate resin of the present invention, a polycarbonate material for an optical disk substrate can be provided by an excellent productivity equal to bisphenol A type PC.

## Claims

**1.** A polycarbonate resin which mainly consists of a constituent unit represented by the following general formula (I) and has a terminal structure represented by the following general formula (II).

[Chemical Formula 1]

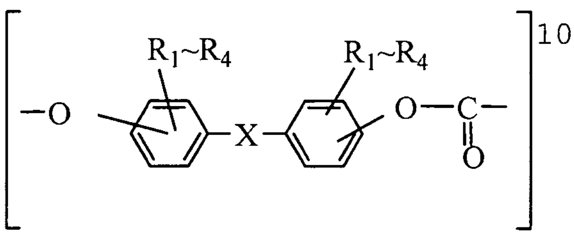

(I)

(In the formula (I), $R_1$ to $R_4$, each independently, represent a group selected from the group consisting of a hydrogen atom, an alkyl group having 1-9 carbon atoms, an aryl group having 6-12 carbon atoms, an alkenyl group having 2-5 carbon atoms, an alkoxy group having 1-5 carbon atoms, and an aralkyl group having 7-17 carbon atoms. When $R_1$ to $R_4$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms. X represents a divalent group selected from the group consisting

of the structures represented by the following formula (III):

[Chemical Formula 2]

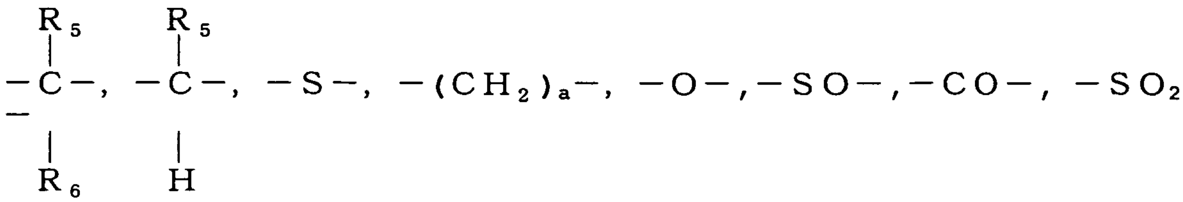

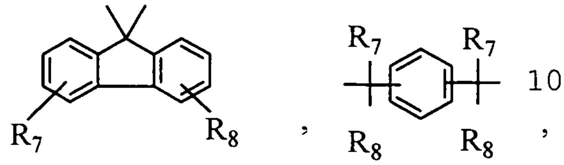

· · · (III)

(In the formula (III), each of $R_5$ and $R_6$ represents independently a group selected from the group consisting of a hydrogen atom, an alkyl group having 1-9 carbon atoms, an alkoxy group having 1-5 carbon atoms, and an aryl group having 6-12 carbon atoms, or a group forming a carbon ring or a heterocycle wherein $R_5$ and $R_6$ are bonded with each other. When $R_5$ and $R_6$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms. "a" represents an integer of 0-20.
Each of $R_7$ and $R_8$ independently represents a group selected from the group consisting of a hydrogen atom, an alkyl group having 1-9 carbon atoms, an alkoxy group having 1-9 carbon atoms, and an aryl group having 6-12 carbon atoms, or a group forming a carbon ring or a heterocycle wherein $R_7$ and $R_8$ are bonded with each other. When $R_7$ and $R_8$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms.)

[Chemical Formula 3]

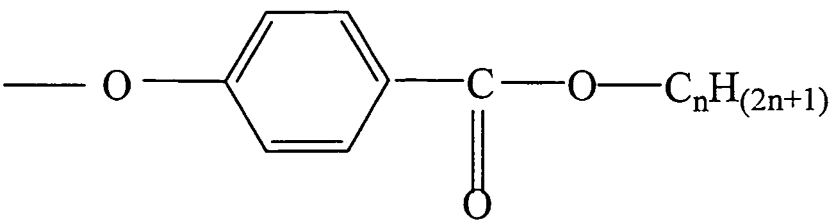

(II)

(In the formula (II), n represents an integer of 10-20.)

**2.** The polycarbonate resin according to claim 1, wherein "n" in said general formula (II) represents an integer of 12-18.

**3.** The polycarbonate resin according to claim 1 or 2, wherein the intrinsic viscosity thereof is 0.2-0.6 dl/g.

**4.** A process for producing a polycarbonate resin according to claim 1 comprising a step of reacting an aromatic dihydric phenol compound, a carbonate-forming compound and a chain terminator represented by the following general

formula (A).

[Chemical Formula 4]

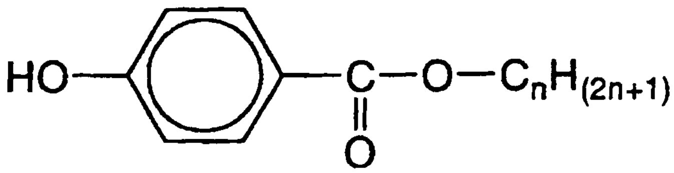

( A )

(In the formula (A), "n" represents an integer of 10-20.)

**5.** The process for producing a polycarbonate resin according to claim 4, wherein said aromatic dihydric phenol compound is a compound represented by the following general formula (B).

[Chemical Formula 5]

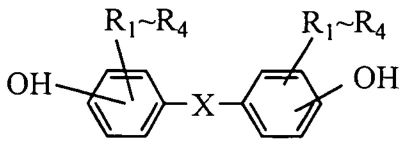

(B)

(In the formula (B), each of $R_1$ to $R_4$ independently represents a group selected from the group consisting of a hydrogen atom, an alkyl group having 1-9 carbon atoms, an aryl group having 6-12 carbon atoms, an alkenyl group having 2-5 carbon atoms, an alkoxy group having 1-5 carbon atoms, and an aralkyl group having 7-17 carbon atoms. When $R_1$ to $R_4$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms. X represents a divalent group selected from the group consisting of the structures represented by the following formula (III):

[Chemical Formula 6]

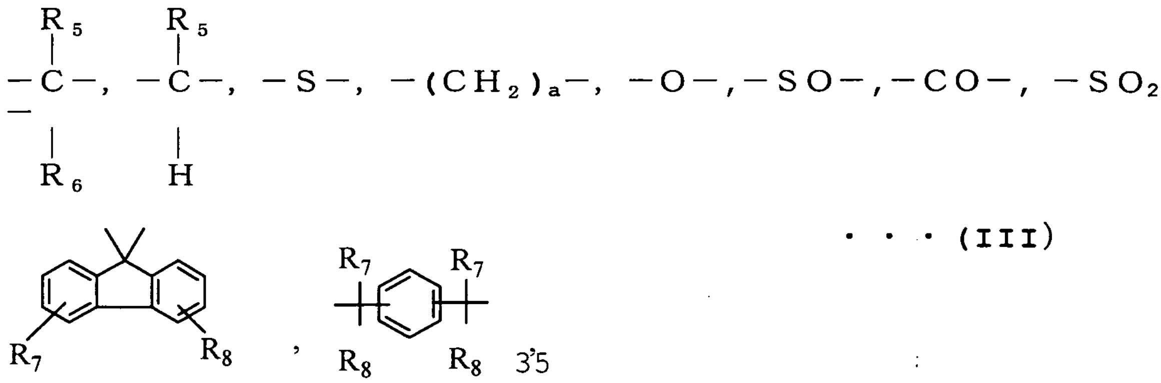

· · · (III)

(In the formula (III), each of $R_5$ and $R_6$ represents independently a group selected from the group consisting of a hydrogen atom, an alkyl group having 1-9 carbon atoms, an alkoxy group having 1-5 carbon atoms, and an aryl group having 6-12 carbon atoms, or a group forming a carbon ring or a heterocycle wherein $R_5$ and $R_6$ are bonded with each other. When $R_5$ and $R_6$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms. "a" represents an integer of 0-20.
Each of $R_7$ and $R_8$ independently represents a group selected from the group consisting of a hydrogen atom, an alkyl group having 1-9 carbon atoms, an alkoxy group having 1-9 carbon atoms, and an aryl group having 6-12 carbon atoms, or a group forming a carbon ring or a heterocycle wherein $R_7$ and $R_8$ are bonded with each other. When $R_7$ and $R_8$ are a group containing a carbon atom, the carbon atom can be bonded with a substituent selected from the group consisting of an alkyl group having 1-5 carbon atoms, an alkenyl group having 2-5 carbon atoms and an alkoxy group having 1-5 carbon atoms.

**6.** The process for producing a polycarbonate resin according to claim 4 or 5, wherein said aromatic dihydric phenol compound is 2,2-bis(4-hydroxyphenyl)propane.

**7.** An optical material comprising the polycarbonate resin according to any one of claims 1 to 3.

**8.** An optical disk substrate molded from the optical material according to claim 7.

**9.** The optical disk substrate according to claim 8, wherein minimum pit length is 0.01 to 0.3 μm and track pitch is 0.01 to 0.6 μm.

**INTERNATIONAL SEARCH REPORT**

International application No.
PCT/JP2007/060003

A. CLASSIFICATION OF SUBJECT MATTER
*C08G64/14*(2006.01)i, *G11B7/24*(2006.01)i, *G11B7/253*(2006.01)i

According to International Patent Classification (IPC) or to both national classification and IPC

B. FIELDS SEARCHED

Minimum documentation searched (classification system followed by classification symbols)
C08G64/14, G11B7/24, G11B7/253

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPIL(QWEB)

C. DOCUMENTS CONSIDERED TO BE RELEVANT

| Category* | Citation of document, with indication, where appropriate, of the relevant passages | Relevant to claim No. |
|---|---|---|
| X | JP 60-203632 A (Mitsubishi Gas Chemical Co., Inc.), 15 October, 1985 (15.10.85), Claims; referential example 4; example 4 (Family: none) | 1-9 |
| X | JP 2003-128906 A (Teijin Chemicals Ltd.), 08 May, 2003 (08.05.03), Claims; Par. Nos. [0019], [0024], [0027] to [0029], [0033] (Family: none) | 1-9 |
| X | JP 1-156323 A (Idemitsu Kosan Co., Ltd.), 19 June, 1989 (19.06.89), Claims; page 3, lower right column; examples 2, 4 (Family: none) | 1-5,7-9 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>28 June, 2007 (28.06.07) | Date of mailing of the international search report<br>10 July, 2007 (10.07.07) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2007/060003

C (Continuation). DOCUMENTS CONSIDERED TO BE RELEVANT

| Category* | Citation of document, with indication, where appropriate, of the relevant passages | Relevant to claim No. |
|---|---|---|
| X | JP 1-156322 A (Idemitsu Kosan Co., Ltd.), 19 June, 1989 (19.06.89), Claims; page 5, upper right column; page 8, lower right column; example 3 (Family: none) | 1-5,7-9 |
| X | JP 1-155301 A (Idemitsu Kosan Co., Ltd.), 19 June, 1989 (19.06.89), Claims; page 5, upper left column; page 8, lower right column; examples 3, 4 (Family: none) | 1-5,7-9 |
| X | JP 2-18501 A (Mitsubishi Gas Chemical Co., Inc.), 22 January, 1990 (22.01.90), Claims; page 4, upper left column; examples 2, 4 (Family: none) | 1-5,7 |
| X | JP 4-19667 A (Idemitsu Kosan Co., Ltd.), 23 January, 1992 (23.01.92), Claims; page 5, lower left column; example 2 (Family: none) | 1-6 |
| X | JP 6-298926 A (Mitsui Toatsu Chemicals, Inc.), 25 October, 1994 (25.10.94), Claims; Par. Nos. [0012], [0014], [0015] to [0016], [0034] (Family: none) | 1-3,7-9 |
| A | JP 2005-529995 A (General Electric Co.), 06 October, 2005 (06.10.05), Claims & WO 2003/106149 A & US 6790929 B & EP 1519831 A | 1-9 |
| A | JP 2004-526817 A (General Electric Co.), 02 September, 2004 (02.09.04), Claims & WO 2002/60855 A & EP 1360220 B & US 20020132957 A | 1-9 |
| A | JP 9-100348 A (Teijin Chemicals Ltd.), 15 April, 1997 (15.04.97), Claims (Family: none) | 1-9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004021343 A
- JP S63182350 B